Europäisches Patentamt

European Patent Office

Office européen des brevets

(11) Veröffentlichungsnummer: **0 365 702**
**A1**

## (12) EUROPÄISCHE PATENTANMELDUNG

(21) Anmeldenummer: 88117857.8

(22) Anmeldetag: 26.10.88

(51) Int. Cl.⁵: **G02F 7/00 , H01J 29/45 ,
H03M 1/22**

Die Bezeichnung der Erfindung wurde geändert (Richtlinien für die Prüfung im EPA, A-III, 7.3).

(43) Veröffentlichungstag der Anmeldung:
02.05.90 Patentblatt 90/18

(84) Benannte Vertragsstaaten:
DE FR GB IT NL

(71) Anmelder: **Heimann GmbH
Weher Köppel 6 Postfach 30 07
D-6200 Wiesbaden 1(DE)**

(72) Erfinder: **Dennhoven, Manfred, Dipl.-Ing.
Kastanienweg 13
D-5421 Osterspai(DE)**
Erfinder: **Fichtner, Frank, Dipl.-Ing.
Am Schmittrain 12
D-6501 Uelversheim(DE)**
Erfinder: **Gauer, Mario, Dr. rer. nat. Dipl.Phys.
Moselstrasse 2b
D-6620 Völklingen(DE)**
Erfinder: **Holzenkämpfer, Enno, Dr. rer. nat.
Dipl.-Phys.
Beethovenstrasse 2
D-6204 Taunusstein 4(DE)**
Erfinder: **Traupe, Ulrich, Dipl.-Ing.
Biebricher Allee 124
D-6200 Wiesbaden(DE)**

(74) Vertreter: **Fuchs, Franz-Josef, Dr.-Ing. et al
Postfach 22 13 17
D-8000 München 22(DE)**

(54) **Digitaler Stellungsgeber.**

(57) Es soll ein Weggeber geschaffen werden, der in kontaktloser, störungssicherer Weise digitale Signale liefert, die der Stellung eines beweglichen Teiles entsprechen.

Diese Aufgabe ist erfindungsgemäß durch folgende Merkmale gelöst:

a) Auf einem Substrat ist eine Vielzahl von Einzelelektroden aufgebracht.

b) Über den Einzelelektroden ist eine großflächige Schicht aus a-Si:H aufgebracht.

c) Über der a-Si:H-Schicht ist eine gemeinsame großflächige Sammelelektrode aufgebracht.

d) Ein Lichtbalken (6) wird über der Sammelelektrode bewegt und aktiviert in jeder Stellung eine vorbestimmte Kombination von photosensitiven Pixeln (1) (Photodioden, Photowiderständen) zwischen den Einzelelektroden und der Sammelelektrode.

e) Die Ausgangssignale der Photodioden bilden eine den Ort des Lichtbalkens (6) charakterisierende Information.

FIG 1

## Digitaler Weggeber

Zur Erfassung der Stellung eines beweglichen Teiles ist es bekannt, mit diesem Teil ein Potentiometer zu koppeln und auf diese Weise ein analoges, der Stellung entsprechendes elektrisches Signal zu gewinnen. Dabei ist ein störanfälliger Schleifkontakt vorgesehen, der sich im Laufe der Zeit abnutzt und auch Störsignale übertragen kann.

Der Erfindung liegt die Aufgabe zugrunde, einen digitalen Weggeber zu schaffen, der schleifkontaktfrei ist und dessen Ausgangssignal in digitaler Form vorliegt, so daß es störsicher gegen Einstreuung (Takt- und Störimpulse) ist.

Diese Aufgabe ist erfindungsgemäß durch folgende Merkmale gelöst:

a) auf einem Substrat ist eine Vielzahl von Einzelelektroden aufgebracht,

b) über den Einzelelektroden ist eine großflächige Schicht aus a-Si:H aufgebracht,

c) über der a-Si:H-Schicht ist eine gemeinsame großflächige Sammelelektrode aufgebracht,

d) ein Lichtbalken wird über der Sammelelektrode bewegt und aktiviert in jeder Stellung eine vorbestimmte Kombination von photosensitiven Anordnungen (vorzugsweise Photodioden oder -widerständen) zwischen den Einzelelektroden und der Sammelelektrode, e) die Ausgangssignale der photosensitiven Anordnungen bilden eine den Ort des Lichtbalkens charakterisierende Information.

Bei dem erfindungsgemäßen digitalen Weggeber erfolgt die Umwandlung der Stellung eines beweglichen Teiles über einen mitbewegten Lichtbalken berührungs- und kontaktfrei. Das Wegsignal liegt in digitaler Form vor und kann in einem Rechner direkt weiterverarbeitet werden. Durch die besondere Anordnung der den digitalen Code erzeugenden Pixel wird elektronisch eine Verbesserung des Auflösevermögens durch Verbesserung des Störabstandes erreicht.

Die Erfindung ist nachfolgend anhand von in der Zeichnung dargestellten Ausführungsbeispielen näher erläutert. Es zeigen:

Fig. 1 einen digitalen Weggeber nach der Erfindung,

Fig. 2 einen Schnitt nach der Linie II-II in Fig. 1, zur Verdeutlichung der unstrukturierten a-Si-H-Schicht,

Fig. 3 eine Photomaske zur Herstellung eines Weggebers nach der Erfindung, und Fig. 4a bis 4c verschiedene Codes für einen digitalen Weggeber nach der Erfindung.

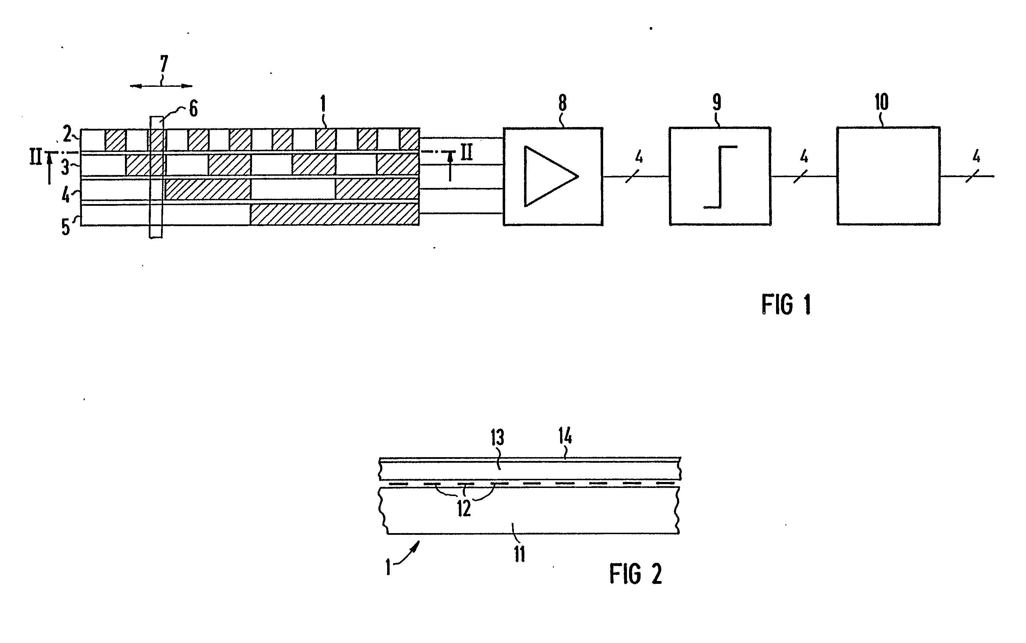

In der Fig. 1 ist eine 4-bit-codierte Photodiodenanordnung 1 aus a-Si:H dargestellt, die dotiert sein kann und vier parallele Photodiodenreihen 2, 3, 4, 5 aufweist, deren Photodioden jeweils eine unterschiedliche Längsausdehnung aufweisen. Die Photodioden sind dabei schraffiert gezeichnet. Über der Photodiodenanordnung 1 ist ein Lichtbalken 6 in Richtung des Doppelpfeiles 7 bewegbar. Die Ausgangssignale der Photodioden der Photodiodenanordnung 1 werden über einen Vorverstärker 8 und einen Komparator 9 einer Datenerfassungseinrichtung 10 zur Weiterverarbeitung zugeführt.

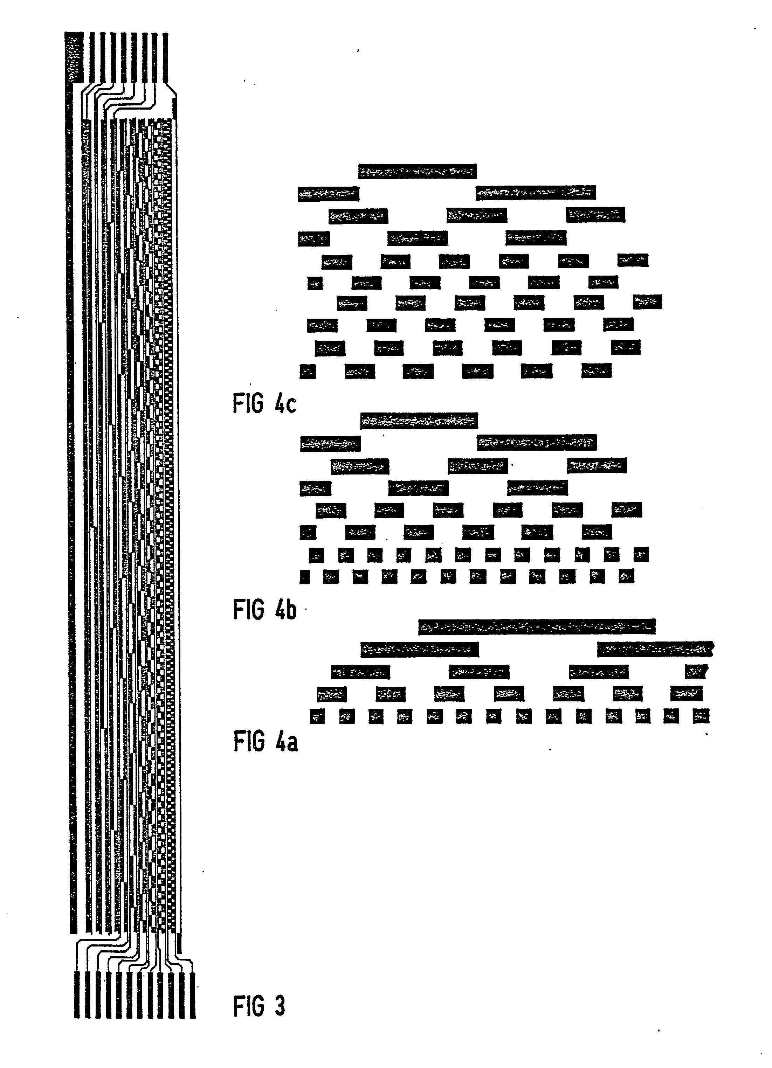

Die Anordnung der einzelnen Photodioden der Photodiodenanordnung 1 ist entsprechend einem vorbestimmten Code, z.B. einem Gray-Code (Fig. 4a), der auch modifiziert sein kann, oder einem anderen, gegebenenfalls eine höhere Auflösung ergebenden Code, gewählt. In der Anordnung gemäß Fig. 1 ist das Ausgangssignal in der gezeichneten Stellung des Lichtbalkens 6 "1100". Vorbestimmten Schrittstellungen des Lichtbalkens 6 ist demgemäß jeweils eine individuelle Kombination von Ausgangssignalen zugeordnet, die demgemäß eine Information über den Ort des Lichtbalkens 6 darstellt.

Aus der Fig. 2 geht hervor, daß die Photodiodenanordnung 1 als großflächiger Sensor ausgebildet ist, der auf einem Substrat 11 eine Vielzahl von Einzelelektroden 12 entsprechend den Photodiodenreihen 2 bis 4 in Fig. 1 aufweist. Die Einzelelektroden 12 können z.B. von einer strukturierten Titanschicht gebildet sein, die dem gewählten Code entsprechend auf dem Substrat 11 aufgedampft ist.

Über den Einzelelektroden 12 ist eine a-Si:H-Schicht 13 großflächig aufgebracht, über der eine gemeinsame, großflächige Sammelelektrode 14, z.B. aus ITO oder SnO, aufgebracht ist. Zwischen der Sammelelektrode 14 und jeweils einer der Einzelelektroden 12 ist jeweils eine Photodiode gebildet. Die Photodioden werden dabei durch das Licht des Lichtbalkens 6 in Abhängigkeit von dessen jeweiliger Stellung aktiviert.

In der Fig. 3 ist in vergrößertem Maßstab eine Photomaske zur Herstellung einer Photodiodenanordnung entsprechend der Photodiodenanordnung 1 in Fig. 1, aber mit geändertem Code, dargestellt, die bei einer Breite von 9 bit und der gewählten Zeilenlänge eine Auflösung von 0,1 mm ermöglicht. Durch diese Anordnung ist die Benutzung einer unstrukturierten a-Si:H-Schicht möglich.

In Fig. 4b ist die Komplementäranordnung gegenüber dem normalen Gray-Code gemäß Fig. 4a dargestellt. Die elektronische Auswertung erreicht durch Verbesserung des Störabstandes eine Verbesserung der Auflösung Fig. 4. c zeigt eine weitere Mofifikation, die bei einem gegebenen kleinsten Pixel eine weitere Erhöhung der Auflösung zuläßt.

Alternativ zu der in Fig. 1 gezeigten longitudinalen Wegauflösung ist eine inkrementale Anordnung (digitaler Dreh- oder Winkelgeber) in einer entsprechenden Anordnung zu verwirklichen.

## Ansprüche

1. Digitaler Weggeber mit folgenden Merkmalen:

a) auf einem Substrat (11) ist eine Vielzahl von Einzelelektroden (12) aufgebracht,

b) über den Einzelelektroden (12) ist eine großflächige Schicht (13) aus a-Si:H aufgebracht,

c) über der a-Si:H-Schicht (13) ist eine gemeinsame großflächige Sammelelektrode (14) aufgebracht,

d) ein Lichtbalken (6) wird über der Sammelelektrode (14) bewegt und aktiviert in jeder Stellung eine vorbestimmte Kombination von photosensitiven Anordnungen (1) zwischen den Einzelelektroden (12) und der Sammelelektrode (14),

e) die Ausgangssignale der photosensitiven Anordnungen bilden eine den Ort des Lichtbalkens (6) charakterisierende Information.

2. Digitaler Weggeber nach Anspruch 1, **dadurch gekennzeichnet,** daß die Pixel der photosensitiven Anordnungen in komplementärer Anordnung strukturiert sind (Fig. 4b).

**FIG 1**

**FIG 2**

EP 0 365 702 A1

88 P 5 1 0 4 E

FIG 4c

FIG 4b

FIG 4a

FIG 3

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.5) |
|---|---|---|---|
| Y | US-A-4 556 816 (IMAMURA) * Zusammenfassung; Spalte 1, Zeilen 46-56; Spalte 5, Zeilen 24-33; Figuren 1,2 * | 1,2 | G 02 F 7/00 H 01 J 29/45 H 03 M 1/22 |
| Y | EP-A-0 092 293 (N.V. PHILLIPS) * Seite 5, Zeile 18 - Seite 9, Zeile 5; Figuren 2-4 * | 1,2 | |
| Y | US-A-3 521 271 (RAPPAPORT) * Zusammenfassung; Spalte 2, Zeile 34 - Spalte 3, Zeile 36; Figuren * | 1,2 | |
| A | PATENT ABSTRACTS OF JAPAN, Band 7, Nr. 23 (P-171)[1168], 29. Januar 1983; & JP-A-57 176 026 (OLYMPUS KOGAKU KOGYO K.K.) 29-10-1982 | 1 | |

RECHERCHIERTE SACHGEBIETE (Int. Cl.5)

G 02 F
H 03 M
H 01 J

Der vorliegende Recherchenbericht wurde für alle Patentansprüche erstellt

| Recherchenort | Abschlußdatum der Recherche | Prüfer |
|---|---|---|
| DEN HAAG | 13-06-1989 | GUIVOL Y. |

KATEGORIE DER GENANNTEN DOKUMENTE

X : von besonderer Bedeutung allein betrachtet
Y : von besonderer Bedeutung in Verbindung mit einer
    anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder
    nach dem Anmeldedatum veröffentlicht worden ist
D : in der Anmeldung angeführtes Dokument
L : aus andern Gründen angeführtes Dokument
........................................................................
& : Mitglied der gleichen Patentfamilie, übereinstimmendes
    Dokument

EPO FORM 1503 03.82 (P0403)